# EUROPEAN PATENT APPLICATION

(11) **EP 4 464 661 A1**
(43) Date of publication of application: **20.11.2024**
(21) Application number: 23752819.5
(22) Date of filing: 06.02.2023
(51) Int. Cl.: C01B 33/18, C08K 3/36, C08L 101/00, G01N 30/88

(54) **SPHERICAL SILICA POWDER**

(30) Priority: 09.02.2022 JP 2022018506
(71) Applicant: Denka Company Limited, Tokyo 103-8338 (JP)
(72) Inventor: MINAMIKAWA, Takaaki, Tokyo 103-8338 (JP); SHIOTSUKI, Hiroyuki, Tokyo 103-8338 (JP); KARINO, Genta, Tokyo 103-8338 (JP)
(74) Representative: Gulde & Partner
(86) International application number: PCT/JP2023/003765
(87) International publication number: WO 2023/153355

(57) **Abstract**

In spherical silica powder according to an embodiment of the present invention, an NO₃⁻ content obtained based on an ion chromatography method is less than or equal to 5 ppm.

## Description

### TECHNICAL FIELD

The present invention relates to spherical silica powder.

### BACKGROUND ART

So far, various developments have been made in a spherical shape. As this kind of technique, for example, a technique described in Patent Document 1 is known. Patent Document 1 describes a method of injecting and melting silica raw material powder into a flame to obtain molten spherical silica.

### RELATED DOCUMENT

### PATENT DOCUMENT

[Patent Document 1] Japanese Unexamined Patent Publication No. 2000-191317

### SUMMARY OF THE INVENTION

### TECHNICAL PROBLEM

However, as a result of investigation by the present inventors, it was found that the molten spherical silica described in Patent Document 1 has room for improvement in terms of manufacturing stability of a resin composition.

### SOLUTION TO PROBLEM

As a result of further investigation, the present inventors found that nitrogen oxide (NOx) may be present in spherical silica powder manufactured using a flame spraying method, and there is a concern that this nitrogen oxide may vary resin characteristics of a resin composition where the spherical silica powder is mixed in a resin. As a result of thorough investigation based on this finding, it was found that, by adjusting a nitrate ion content in the spherical silica powder to be less than or equal to a predetermined value, a reduction in curing characteristics of a resin composition can be suppressed, and manufacturing stability of the resin composition can be improved, thereby completing the present invention.

According to one aspect of the present invention, the following spherical silica powder is provided.

1. Spherical silica powder,
   in which an NO₃⁻ content obtained based on the following ion chromatography method is less than or equal to 5 ppm,
   (Ion Chromatography Method)
   after putting the spherical silica powder into distilled water and heating and cooling the mixed liquid, a supernatant liquid obtained by centrifugal separation of the mixed liquid is acquired as an extraction liquid;
   an NO₂⁻ concentration and an NO₃⁻ concentration in the extraction liquid are obtained by an ion chromatography method; and
   an NO₂⁻ content and an NO₃⁻ content in the spherical silica powder are calculated based on the obtained NO₂⁻ concentration and the obtained NO₃⁻ concentration.
2. The spherical silica powder according to 1.,
   in which when the NO₂⁻ content and the NO₃⁻ content in the spherical silica powder obtained based on the ion chromatography method are represented by N2 and N3, respectively, N2 and N3 are configured to satisfy 0.05 ≤ N3/N2 ≤ 30.
3. The spherical silica powder according to 1. or 2.,
   in which in a volume frequency particle size distribution measured using a wet laser diffraction scattering method, when a particle size corresponding to a cumulative value of 10% is represented by D₁₀, a particle size corresponding to a cumulative value of 50% is represented by D₅₀, and a particle size corresponding to a cumulative value of 97% is represented by D₉₇,
   (D₉₇ - D₁₀)/D₅₀ is more than or equal to 1.0 and less than or equal to 10.0.
4. The spherical silica powder according to any one of 1. to 3.,
   in which in a volume frequency particle size distribution measured using a wet laser diffraction scattering method, when a particle size corresponding to a cumulative value of 50% is represented by D₅₀ and a particle size corresponding to a cumulative value of 97% is represented by D₉₇,
   D₉₇/D₅₀ is more than or equal to 2.0 and less than or equal to 30.0.
5. The spherical silica powder according to any one of 1. to 4.,
   in which a ratio of amorphousness is more than or equal to 95%.
6. The spherical silica powder according to any one of 1. to 5.,
   in which each of an SO₃²⁻ content and an SO₄²⁻ content in the spherical silica powder obtained as in the ion chromatography method is less than or equal to 10 ppm.

### ADVANTAGEOUS EFFECTS OF INVENTION

According to the present invention, spherical silica powder having excellent manufacturing stability of a resin composition is provided.

### BRIEF DESCRIPTION OF THE DRAWINGS

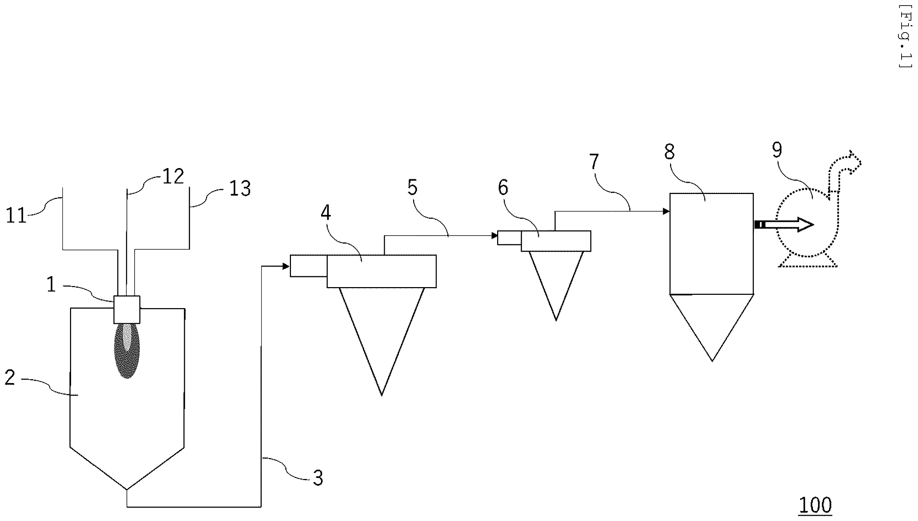

Fig. 1 is a schematic cross-sectional view showing a configuration of a thermal spraying device used for manufacturing spherical silica powder.

### DESCRIPTION OF EMBODIMENTS

The summary of spherical silica powder according to an embodiment of the present invention will be described.

In the spherical silica powder according to the present embodiment, an NO₃⁻ content obtained based on the following ion chromatography method is configured to be less than or equal to 5 ppm.

According to the findings by the present inventors, it was found that, in a process of manufacturing spherical silica powder using a flame spraying method, for example, by introducing secondary air and appropriately controlling an introduction amount of the secondary air to adjust a temperature in a cyclone or a bag filter for collecting powder to be high, an NO₃⁻ content can be reduced.

The detailed mechanism is not clear, but it is known that a nitrogen source in supporting gas is derived from NOx. It is considered that, by suppressing occurrence of condensation on surfaces of collected silica particles in a cyclone or a bag filter that is controlled to be in a high temperature environment, remaining of Nox on the surfaces of the silica particles caused by adsorption of Nox during condensation can be prevented. For example, by suppressing the amount of air (coolant) having a relatively low temperature in the atmosphere that is secondarily introduced and/or secondarily introducing combustion exhaust gas having a relatively high temperature, the cyclone or the bag filter can be controlled to be in a high temperature environment.

The upper limit of the NO₃⁻ content in the spherical silica powder is less than or equal to 5 ppm, preferably less than or equal to 3 ppm, and more preferably less than or equal to 1 ppm. As a result, a reduction in curing characteristics of a resin composition can be suppressed.

On the other hand, the lower limit of the NO₃⁻ content in the spherical silica powder is not particularly limited and may be more than or equal to 0 ppm or may be more than or equal to 0.01 ppm.

In the spherical silica powder, when the NO₂⁻ content and the NO₃⁻ content in the spherical silica powder measured by the following ion chromatography method are represented by N2 and N3, respectively, N2 and N3 may be configured to satisfy 0.05 ≤ N3/N2 ≤ 30.

The upper limit of N3/N2 is less than or equal to 30, preferably less than or equal to 20, and more preferably less than or equal to 10. As a result, corrosion of a metal material, such as copper wire corrosion, caused by a resin composition can be suppressed.

On the other hand, the lower limit of N3/N2 is not particularly limited and may be more than or equal to 0 ppm or may be more than or equal to 0.01 ppm.

Each of an SO₃²⁻ content and an SO₄²⁻ content in the spherical silica powder obtained based on the following ion chromatography method is, for example, less than or equal to 10 ppm, preferably less than or equal to 8 ppm, and more preferably less than or equal to 6 ppm. By forming a part of an electronic device using a resin composition including the spherical silica powder, it is expected that the reliability of the electronic device can be improved.

An example of the procedure of the above-described ion chromatography method will be described.

First, the spherical silica powder is put into distilled water, and this mixed liquid is put into a container, is shaken for 1 minute, is left to stand at 95°C for 20 hours, and is cooled. Water corresponding to the amount of water evaporated is added to the container to make a fixed amount. Next, the supernatant liquid is acquired as an extraction liquid by centrifugal separation.

Next, the concentration of each of NO₂⁻, NO₃⁻, SO₃²⁻, and SO₄²⁻in the extraction liquid is measured using the ion chromatography method.

Each of the NO₂⁻ content, the NO₃⁻ content, the SO₃²⁻ content, and the SO₄²⁻ content in the spherical silica powder is calculated based on the value of the concentration obtained by the measurement.

A volume frequency particle size distribution of the spherical silica powder is measured using a wet laser diffraction scattering method, and in the volume frequency particle size distribution, a particle size corresponding to a cumulative value of 10% is represented by D₁₀, a particle size corresponding to a cumulative value of 50% is represented by D₅₀, and a particle size corresponding to a cumulative value of 97% is represented by D₉₇.

The upper limit of (D₉₇ - D₁₀)/D₅₀ is, for example, less than or equal to 10.0, preferably less than or equal to 7.0, and more preferably less than or equal to 5.0. As a result, the width of the particle size distribution is sharp, and fluidity can be improved.

On the other hand, the lower limit of (D₉₇ - D₁₀)/D₅₀ is, for example, more than or equal to 1.0, preferably more than or equal to 1.1, and more preferably more than or equal to 2.0. As a result, the particle size distribution has a constant width, and moldability can be improved.

The upper limit of D₉₇/D₅₀ is, for example, less than or equal to 30.0, preferably less than or equal to 20.0, and more preferably less than or equal to 15.0. As a result, the particle size of coarse particles is sharp, and molding failure of a resin molded product caused by the coarse particles can be suppressed.

On the other hand, the lower limit of D₉₇/D₅₀ is, for example, more than or equal to 2.0, preferably more than or equal to 3.0, and more preferably more than or equal to 5.0. As a result, the particle size distribution has a constant width, and fluidity and moldability can be improved.

The particle size distribution of the spherical silica powder is a value based on particle size measurement using a laser diffraction scattering method, and can be measured using a particle size distribution analyzer, for example, "MODEL LS-13-230" (manufactured by Beckman Coulter, Inc.). During the measurement, water is used as a solvent, and as a pre-treatment, a dispersion treatment can be performed by applying an output of 200 W for 1 minute using a homogenizer. In addition, a polarization intensity differential scattering (PIDS) concentration is adjusted to be 45 to 55%. 1.33 is used as a refractive index of water, and a refractive index of a material of the powder is considered as a refractive index of the powder. For example, amorphous silica is measured assuming that the refractive index is 1.50.

A method of manufacturing the spherical silica powder according to the present embodiment will be described.

The spherical silica powder will also be referred to as molten spherical particles, and silica raw material powder is supplied into a high-temperature flame formed by a combustion reaction of combustible gas and supporting gas, and is melted and spheroidized at higher than or equal to a melting point thereof to manufacture the spherical silica powder. As necessary, the molten spherical particle obtained as described above may be classified and screened.

Fig. 1 shows an example of a schematic diagram of a thermal spraying device used for manufacturing the spherical silica powder.

A thermal spraying device 100 of Fig. 1 is composed of: a melting furnace 2 where a burner 1 is provided in; cyclones 4 and 6 for classifying molten spherical particles produced from high-temperature exhaust gas of the flame by suction of a blower 9; and a bag filter 8 for recovering fine powder that cannot be collected by the cyclones 4 and 6.

The melting furnace 2 is composed of a vertical furnace body but is not limited thereto. The melting furnace 2 may be a so-called horizontal furnace or an inclined furnace that is a horizontal type and blasts a flame in a horizontal direction.

The high-temperature exhaust gas is cooled by pipes 3, 5, and 7 including a water-cooling jacket.

A suction gas amount control valve and a gas exhaust port (not shown) may be connected to the blower 9.

A collected powder extraction device (not shown) may be connected to lower portions of the melting furnace 2, the cyclones 4 and 6, and the bag filter 8.

The classification can be performed using a well-known device such as a gravity-settling chamber, a cyclone, or a classifier having a rotary blade. This classification operation may be incorporated into a transport step of a melted and spheroidized product, or may be performed in another line after collecting the powder in a batchwise manner.

As the combustible gas, for example, one kind or two or more kinds such as acetylene, propane, or butane is used. Propane, butane, or a mixed gas thereof having a relatively small amount of heat generation is preferable.

As the supporting gas, for example, gas including oxygen is used. In general, the use of pure oxygen having a concentration of more than or equal to 99 wt% is inexpensive and most preferable. In order to reduce the amount of heat generation from the gas, inert gas such as air or argon can also be mixed with the supporting gas.

The spherical silica powder may be amorphous and/or crystalline.

In the spherical silica powder, for example, a ratio of amorphousness measured using the following method is preferably more than or equal to 95% and more preferably more than or equal to 97%. The ratio of amorphousness is measured from an intensity ratio of specific diffraction peaks obtained by performing X-ray diffraction analysis in a 20 range of 26° to 27.5° of a CuKα ray using a powder X-ray diffractometer (for example, trade name "MODEL MiniFlex", manufactured by RIGAKU Corporation). In the silica powder, crystalline silica has a main peak at 26.7°, and amorphous silica has no peak. When amorphous silica and crystalline silica are mixed, a peak height of 26.7° corresponding to the proportion of the crystalline silica is obtained. Therefore, a crystalline silica mixing ratio (X-ray diffraction intensity of sample/X-ray diffraction intensity of crystalline silica) is calculated from a ratio of an X-ray intensity of the sample to an X-ray intensity of a crystalline silica standard sample, and the ratio of amorphousness is obtained from the expression "Ratio of Amorphousness (%) = (1 - Crystalline Silica Mixing Ratio) × 100".

In the spherical silica powder, it is preferable that a ratio (S_{B}/S_{C}) of a specific surface area S_{B} measured using a BET method to a theoretical specific surface area Sc calculated from the particle size distribution is, for example, less than or equal to 2.5. This ratio being high represents that the content of ultrafine particles that cannot be detected by a particle size distribution analyzer of a laser diffraction method or the like is high. From the viewpoint of suppressing an increase in viscosity when the spherical silica particles are mixed in a resin composition, the value of S_{B}/S_{C} described below is less than or equal to 2.5 and more preferably less than or equal to 2.0.

The specific surface area S_{B} is a value based on a BET method, and can be measured using a specific surface area measuring instrument, for example, "MODEL 4-SORBU2" (manufactured by Yuasa Ionics Ltd.).

The theoretical specific surface area Sc can be automatically calculated by the above-described particle size distribution analyzer. The principle of the measuring instrument is based on the expression "Sc = 6/(ρ·D)". In the expression, D represents an area average particle size (µm), and ρ represents a density (g/cm³) of the spherical silica powder. For example, when the powder is amorphous silica, the theoretical specific surface area Sc is 2.21.

D is obtained from the expression "D = Σ(ni·ai·di)/Σ(ni·ai)". Here, in one population of particles of the powder, when the number of particles having particle sizes d1, d2, ..., di, ..., and dk in order from the smallest particle size are represented by n1, n2, ..., ni, ..., and nk, respectively, and surfaces areas per particle are represented by a1, a2, ..., ai, ..., and ak, respectively, D is obtained from "D = (n1·a1·d1 + n2·a2·d2 + ... + ni·ai·di + ... + nk·ak·dk)/(n1·a1 + n2·a2 + ... + ni·ai + nk·ak)".

It is preferable that the spherical silica powder does not substantially include particles having a particle size of less than 50 nm. As a result, an increase in viscosity when the spherical silica particles are mixed in a resin composition can be suppressed.

Not substantially including the particles having a particle size of less than 50 nm represents that, when the number of particles having a particle size of less than 50 nm in any 100 photographs obtained at a magnification of 50,000-fold by an electron microscope is counted and is converted into an average value per photograph, the value is less than 50. It is preferable that the content of the particles having a particle size of less than 50 nm is small.

The electron microscope photographs can be obtained using a field emission scanning electron microscope (MODEL "FE-SEM, JSM-6301F", manufactured by JEOL Ltd.) under conditions of an accelerated voltage of 15 kV and an irradiation current of 3 × 10 - 11 A. As a pre-treatment of the imaging, there is a method in which using a vacuum deposition device (MODEL "JEE-4X", manufactured by JEOL Ltd.), carbon is deposited on the spherical silica powder for 2 seconds, and gold-palladium is further deposited for 60 seconds.

As the degree of "spherical" in the spherical silica powder, for example, it is preferable that an average sphericity of particles having a particle size of less than a cumulative particle size distribution of 75% (d75) is more than or equal to 0.90 and an average sphericity of particles having a particle size of more than or equal to d75 is more than or equal to 0.85. In general, when the average sphericity of the spherical silica powder increases, fluidity tends to be improved. In particular, by adjusting the average sphericity of the coarse particles having a particle size of more than or equal to d75 to be more than or equal to 0.85, the effect of the present embodiment can be further improved.

After incorporating a particle image obtained by a stereoscopic microscope (for example, MODEL "SMZ-10 type" manufactured by Nikon Corporation), a scanning electron microscope, or the like into an image analyzer (for example, manufactured by Nippon Avionics Co., Ltd.), the average sphericity can be measured as follows. That is, a projected area (A) and a perimeter (PM) of the particle are measured from the photograph. When an area of a true circle corresponding to the perimeter (PM) is represented by (B), a roundness of the particle can be represented as A/B. Accordingly, when a true circle having the same perimeter as a perimeter (PM) of a sample particle is assumed, PM = 2nr and B = πr², and thus B = n × (PM/2π)². The sphericity of each of the particles can be calculated as "Sphericity = A/B = A × 4π/(PM)². Roundnesses of any 200 particles obtained as described above are obtained, and an average value thereof can be obtained as the average sphericity.

As a method of measuring the roundness other than the above-described method, the roundness can also be obtained by conversion using the expression "Roundness = (Circularity)²" from the circularity of each of the particles that is quantitatively and automatically measured by a particle image analyzer (for example, MODEL "FPIA-1000", manufactured by Sysmex Corporation).

A material where the spherical silica powder according to the present invention is mixed in a resin composition can be suitably used for a resin molding material.

Next, the resin composition according to the present embodiment will be described.

The resin composition includes a resin or a well-known resin additive in addition to the spherical silica powder according to the present invention.

The spherical silica powder in the resin composition may be used alone or may be mixed with another filler for use. The resin composition may include 10 to 99 mass% of the spherical silica powder, or may include 10 to 99 mass% of mixed inorganic powder including the spherical silica powder and the other filler. In addition, the content of the other filler in the mixed inorganic powder may be, for example, 1 to 20 mass% or 3 to 15 mass% with respect to 100 mass% of the spherical silica powder.

In the present specification, "to" represents that an upper limit value and a lower limit value are included unless specified otherwise.

Examples of the other filler include alumina, titania, silicon nitride, aluminum nitride, silicon carbide, talc, and calcium carbonate. As the other filler, a filler having an average particle size of about 5 to 100 um is used, and a particle size configuration and a shape thereof are not particularly limited.

Examples of the above-described resin include an epoxy resin, a silicone resin, a phenol resin, a melamine resin, a urea resin, an unsaturated polyester, a fluororesin, a polyamide such as polyimide, polyamideimide, or polyetherimide, a polyester such as polybutylene terephthalate or polyethylene terephthalate, polyphenylene sulfide, wholly aromatic polyester, polysulfone, a liquid crystal polymer, polyethersulfone, polycarbonate, a maleimide-modified resin, an ABS resin, an acrylonitrile-acrylic rubber-styrene (AAS) resin, and an acrylonitrile-ethylene-propylene-diene rubber-styrene (AES) resin. These resins may be used alone or may be used in combination of two or more kinds.

The resin composition can be manufactured, for example, by blending raw material components at a predetermined amount ratio using a blender, a Henschel mixer, or the like, kneading the blended product using a heating roll, a kneader, a single-screw or twin-screw kneader, or the like, and cooling and crushing the kneaded product.

Hereinabove, the embodiment of the present invention has been described. However, the embodiment is merely an example of the present invention, and various configurations other than the above-described configurations can be adopted. In addition, the present invention is not limited to the above-described embodiment, and modifications, improvements, and the like within a range where the object of the present invention can be achieved are included in the present invention.

### Examples

Hereinafter, the present invention will be described in detail with reference to Examples. However, the present invention is not limited to the description of these Examples.

### <Manufacturing of Spherical Silica Powder>

Spherical silica powder was manufactured using the thermal spraying device 100 shown in Fig. 1 where the burner 1 was provided in the upper portion of the melting furnace 2 and a collection line consisting of the cyclones 4 and 6 and the bag filter 8 was directly connected to the lower portion of the melting furnace 2.

The burner 1 had a double pipe structure capable of forming an inner flame and an outer flame, was provided on the top portion of the melting furnace 2, and was connected to each of a combustible gas pipe 11, a supporting gas supply pipe 12, and a raw material supply pipe 13.

In the melting furnace 2, the silica raw material powder was supplied into a high-temperature flame by the raw material supply pipe 13 and was melted such that spheroidized molten spherical particles were able to be formed. The molten spherical particles having passed through the melting furnace 2 were sucked by the blower 9 together with combustion exhaust gas, were moved into the pipes 3, 5, and 7 by the air, and were classified and collected by the cyclones 4, 6 or the bag filter 8.

### (Example 1)

Using the above-described thermal spraying device 100, LPG as the combustible gas was supplied from the combustible gas pipe 11, air or oxygen as the supporting gas was supplied from the supporting gas supply pipe 12, and a high-temperature flame was formed by combustion of LPG and oxygen in the burner 1.

Secondary air was supplied to the cyclone 4 (first cyclone) by a rotary valve (not shown) provided in the pipe 3. As the secondary air, air in the atmosphere was used. In addition, the degree of opening/closing of a lower valve (lower aperture) in the cyclone 4 and the cyclone 6 (second cyclone) was set to 100%. Further, secondary air was also supplied from the pipe 7 as described above. As the silica raw material powder, a crushed product having an average particle size (D₅₀) of 5 to 40 um obtained by crushing natural silica was used, and molten spherical particles collected by the cyclones 4 and 6 and the bag filter 8 were recovered as the spherical silica powder, respectively.

13 kinds of powders shown in Table 1 were manufactured while adjusting the flame forming conditions, the raw material particle size, the raw material supply amount, classification conditions, mixing conditions, and the like. A median size was adjusted by adjusting the raw material particle size, performing a multi-stage screening operation of the spheroidized powder, and adjusting the mixing amounts of coarse particles, medium particles, fine particles, ultrafine particles, and the like obtained through the above-described operation.

### (Examples 2 to 12)

Spherical silica powders were obtained using the same method as that of Example 1, except that, the particle sizes were adjusted in a state where, when the supply amount of the secondary air of Example 1 is represented by V (kg/h), the supply amount of Example 2 was set to 1.3 V that was 1.3 times, the supply amount of Example 3 was set to 0.6 V that was 0.6 times, the supply amount of Example 4 was set to 1.1 V that was 1.1 times, the supply amount of Example 5 was set to 0.9 V that was 0.9 times, the supply amount of Example 6 was set to 0.7 V that was 0.7 times, and the supply amounts of Examples 7 to 12 were set to 1 V that was 1 time.

### (Comparative Example 1)

Spherical silica powder was obtained using the same method as that of Example 7, except that a large amount of secondary air was supplied to adjust the particle size such that, when the supply amount of the secondary air of Example 1 is represented by V (kg/h), the supply amount was set to 1 V that was 3 times.

**[Table 1]**

| Silica Powder | | Unit | Example 1 | Example 2 | Example 3 | Example 4 | Example 5 | Example 6 | Example 7 | Example 8 | Example 9 | Example 10 | Example 11 | Example 12 | Comparative Example 1 |
|---|---|---|---|---|---|---|---|---|---|---|---|---|---|---|---|
| Content | NO₂⁻ | ppm | 0.10 | 0.15 | 0.10 | 0.10 | 0.10 | 0.10 | 0.10 | 0.10 | 0.10 | 0.10 | 0.10 | 0.10 | 0.10 |
| | NO₃⁻ | | 0.95 | 2.77 | 0.92 | 0.34 | 1.05 | 0.30 | 0.10 | 0.10 | 0.10 | 0.10 | 0.10 | 0.10 | 7.30 |
| | SO₃²⁻ | | <2 | <2 | <2 | <2 | <2 | <2 | <2 | <2 | <2 | <2 | <2 | <2 | <2 |
| | SO₄²⁻ | | 3.5 | 2.2 | 2.0 | 2.0 | 1.3 | 3.3 | 2.6 | 3.7 | 4.5 | 3.7 | 3.7 | 5.1 | 4.4 |
| Particle Size Distribution | D₁₀ | µm | 2.3 | 2.3 | 2.3 | 3.4 | 2.7 | 2.3 | 3.1 | 2.5 | 2.2 | 1.9 | 2.4 | 2.3 | 3.2 |
| | D₅₀ | | 20.4 | 16.5 | 27.6 | 40.2 | 31.1 | 21.5 | 33.0 | 24.3 | 30.4 | 17.1 | 31.5 | 27.2 | 20.1 |
| | D₉₇ | | 102.7 | 107.0 | 95.1 | 110.8 | 108.8 | 101.1 | 108.6 | 103.1 | 105.6 | 76.9 | 81.9 | 82.1 | 111.3 |
| | D₉₇/D₅₀ | | 5.0 | 6.5 | 3.4 | 2.8 | 3.5 | 4.7 | 3.3 | 4.2 | 3.5 | 4.5 | 2.6 | 3.0 | 5.5 |
| | (D₉₇-D₁₀) /D₅₀ | | 4.9 | 6.3 | 3.4 | 2.7 | 3.4 | 4.6 | 3.2 | 4.1 | 3.4 | 4.4 | 2.5 | 2.9 | 5.4 |
| Manufacturing Stability | | | Good | Good | Good | Good | Good | Good | Good | Good | Good | Good | Good | Good | Bad |

### <Content: NO₂⁻, NO₃⁻, SO₃²⁻, SO₄²⁻>

10 g of the obtained spherical silica powder and 70 g of distilled water were put into a polyethylene container, and this mixed liquid was shaken for 1 minute, was put into a dryer, was left to stand at 95°C for 20 hours, and was cooled. Water corresponding to the amount of water evaporated was added to make a fixed amount. Next, the supernatant liquid was acquired as an extraction liquid by centrifugal separation.

The concentration of each of NO₂⁻, NO₃⁻, SO₃²⁻, and SO₄²⁻ in the extraction liquid was measured using the ion chromatography method. Each of the NO₂⁻ content, the NO₃⁻ content, the SO₃²⁻content, and the SO₄²⁻ content in the spherical silica powder was calculated based on the value of the concentration obtained by the measurement. The results of Examples are shown in Table 1.

### <Particle Size Distribution>

Regarding the obtained spherical silica powder, a volume frequency particle size distribution was obtained with a wet laser diffraction scattering method using a particle size distribution analyzer (LS-13-230, manufactured by Beckman Coulter, Inc.). Water was used as a solvent, and as a pre-treatment, a dispersion treatment was performed for the measurement by applying an output of 200 W for 1 minute using a homogenizer. In addition, a polarization intensity differential scattering (PIDS) concentration was adjusted to be 45 to 55% for the measurement.

Based on the obtained volume frequency particle size distribution, a particle size D_{X} corresponding to a cumulative value of X% was calculated.

### <Manufacturing Stability of Resin Composition>

4.2 mass% of 4,4'-Bis(2,3-epoxypropoxy)-3,3',5,5'-tetramethylbiphenyl type epoxy resin, 4.3 mass% of a phenol resin, 0.2 mass% of triphenylphosphine, 0.5 mass% of γ-glycidoxypropyltrimethoxysilane, 0.3 mass% of carbon black, and 0.5 mass% of carnauba wax were added to 90 mass% of the obtained spherical silica powder, and this mixed liquid was dry-blended using a Henschel mixer. Next, this compound was heated and kneaded using a twin-screw extruder/kneader (heater temperature: 105 to 110°C), and the extrudate was cooled by a cooling press machine and was crushed to obtain a resin composition.

It was verified that the resin compositions using the spherical silica powders according to Examples 1 to 12 were able to be used without curing failure and without any problem in practice (Good). On the other hand, it was verified that, in the resin composition using the spherical silica powder according to Comparative Example 1, curing failure occurred (Bad).

In the results of the spherical silica powders according to Examples 1 to 12, manufacturing stability of a resin composition was able to be improved as compared to Comparative Example 1.

The present application claims priority based on Japanese Patent Application No. 2022-018506 filed on February 9, 2022, the entire content of which is incorporated herein by reference.

### REFERENCE SIGNS LIST

- 1: Burner
- 2: Melting furnace
- 3: Pipe
- 4: Cyclone
- 5: Pipe
- 6: Cyclone
- 7: Pipe
- 8: Bag filter
- 9: Blower
- 11: Combustible gas pipe
- 12: Supporting gas supply pipe
- 13: Raw material supply pipe
- 100: Thermal spraying device

## Claims

1. Spherical silica powder,
wherein an NO₃⁻ content obtained based on the following ion chromatography method is less than or equal to 5 ppm,
(Ion Chromatography Method)
after putting the spherical silica powder into distilled water and heating and cooling the mixed liquid, a supernatant liquid obtained by centrifugal separation of the mixed liquid is acquired as an extraction liquid;
an NO₂⁻ concentration and an NO₃⁻ concentration in the extraction liquid are obtained by an ion chromatography method; and
an NO₂⁻ content and an NO₃⁻ content in the spherical silica powder are calculated based on the obtained NO₂⁻ concentration and the obtained NO₃⁻ concentration.

2. The spherical silica powder according to Claim 1,
wherein when the NO₂⁻ content and the NO₃⁻ content in the spherical silica powder obtained based on the ion chromatography method are represented by N2 and N3, respectively, N2 and N3 are configured to satisfy 0.05 ≤ N3/N2 ≤ 30.

3. The spherical silica powder according to Claim 1 or 2,
wherein in a volume frequency particle size distribution measured using a wet laser diffraction scattering method, when a particle size corresponding to a cumulative value of 10% is represented by D₁₀, a particle size corresponding to a cumulative value of 50% is represented by D₅₀, and a particle size corresponding to a cumulative value of 97% is represented by D₉₇,
(D₉₇ - D₁₀)/D₅₀ is more than or equal to 1.0 and less than or equal to 10.0.

4. The spherical silica powder according to any one of Claims 1 to 3,
wherein in a volume frequency particle size distribution measured using a wet laser diffraction scattering method, when a particle size corresponding to a cumulative value of 50% is represented by D₅₀ and a particle size corresponding to a cumulative value of 97% is represented by D₉₇,
D₉₇/D₅₀ is more than or equal to 2.0 and less than or equal to 30.0.

5. The spherical silica powder according to any one of Claims 1 to 4,
wherein a ratio of amorphousness is more than or equal to 95%.

6. The spherical silica powder according to any one of Claims 1 to 5,
wherein each of an SO₃²⁻ content and an SO₄²⁻ content in the spherical silica powder obtained as in the ion chromatography method is less than or equal to 10 ppm.
